(19) Europäisches Patentamt / European Patent Office / Office européen des brevets

(11) **EP 3 460 239 B1**

(12) **EUROPÄISCHE PATENTSCHRIFT**

(45) Veröffentlichungstag und Bekanntmachung des Hinweises auf die Patenterteilung:
**16.06.2021   Patentblatt 2021/24**

(51) Int Cl.:
***F03D 80/80*** *(2016.01)*

(21) Anmeldenummer: **18195320.9**

(22) Anmeldetag: **19.09.2018**

(54) **KABELSATTEL ZUM STÜTZEN VON KABELN IN EINER KABELSCHLAUFE EINER WINDKRAFTANLAGE**

CABLE SADDLE FOR SUPPORTING CABLES IN A CABLE LUG OF A WIND TURBINE

SELLE DE CÂBLE DESTINÉE À SUPPORTER DES CÂBLES DANS UNE BOUCLE DE CÂBLE D'UNE ÉOLIENNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.09.2017   DE 102017008893**

(43) Veröffentlichungstag der Anmeldung:
**27.03.2019   Patentblatt 2019/13**

(73) Patentinhaber: **Siemens Gamesa Renewable Energy Service GmbH
22297 Hamburg (DE)**

(72) Erfinder:
• **Narendranath, Sreenath
673016 Kozhikode / Kerala State (IN)**
• **Setty, Jayashanka Kittur Nanjappa
560049 Bangalore / Karnataka State (IN)**
• **Mastud, Vikas Vitthal
400610 Thane (West) / Maharashtra State (IN)**

(74) Vertreter: **Glawe, Delfs, Moll
Partnerschaft mbB von
Patent- und Rechtsanwälten
Postfach 13 03 91
20103 Hamburg (DE)**

(56) Entgegenhaltungen:
EP-A1- 2 495 439      WO-A2-2010/105852
CN-B- 103 362 749     US-A1- 2012 133 144

**Beschreibung**

Die Erfindung betrifft Kabelsattel zum Stützen von Kabeln in einer Kabelschlaufe einer Windkraftanlage und entsprechende Kabelsattel umfassende Windkraftanlagen.

Moderne Windkraftanlagen verfügen üblicherweise über eine horizontale Rotorachse, die eine Ausrichtung zum Wind erfordert. Dies wird durch ein Schwenken der die Rotorachse haltenden Gondel bezogen auf den stationären Turm in Azimutrichtung erreicht, um der Windrichtung zu folgen. Während des Betriebs wird die Gondel in einer zufällig verteilten Abfolge, die der stochastischen Windrichtungsverteilung entspricht, geschwenkt. Die elektrische Übertragung von der den Stromgenerator enthaltenden Gondel muss die konstante Relativbewegung zwischen der Gondel und dem Turm mit seiner stationären Verkabelung ausgleichen.

Für diesen Ausgleich sind sogenannte Kabelschlaufen, bei denen die Kabel in einer hängenden Schlaufe von der Gondel in den Turm geführt werden, weit verbreitet. Die Kabelschlaufe erlaubt gewöhnlich zwei oder drei vollständige Umdrehungen der Gondel, was sich in den meisten Fällen, zumindest dann, wenn die Steuerungseinrichtung der Windkraftanlage ein Notfallprogramm zum Entwirren der Kabelschlaufe bei drohender Überbeanspruchung umfasst, als ausreichend erwiesen hat.

WO 2010/105852 A2 hat eine Weiterentwicklung der Kabelschlaufe dahingehend, dass die Kabelschlaufe durch einen drehfesten, aber vertikal bewegbaren Führungsring in zwei Abschnitte, einen lediglich verdrehbaren Abschnitt und einen gekrümmten Längenausgleichsabschnitt, geteilt ist, beschrieben. Bei Letzterer werden durch die Schwenkbewegung der Gondel in keinster Weise verdreht. Weitere Beispiele aus dem Stand der Technik sind aus EP2495439A1 und US2012133144A1 bekannt.

Unabhängig davon, ob ein Führungsring vorhanden ist, umfasst die Kabelschlaufe an ihrem unteren Ende einen freihängenden Schlingenteil, dessen turmnahes Ende in der Regel über ein Richtungswechselelement geführt wird. Diese Richtungselemente umfassen eine horizontale Stütze, über welche die Kabel von der Kabelschlaufe locker gehängt werden. Damit nebeneinander liegende Kabel in der Nähe des Richtungswechselelements nicht miteinander in Kontakt stehen, um ein Aneinanderscheuern zu vermeiden, erfordert die horizontale Stütze oft eine erhebliche Breite und somit ein hohes Gewicht der ausreichend stabilen Struktur.

Alternativ hierzu können die Kabel in ein einziges Richtungswechselelement gezwängt werden, so dass sie wenigstens teilweise über einander liegen. In diesem Fall interagieren die Kabel jedoch ständig (z. B. durch Scheuern aneinander oder miteinander Verdrehen), was zu erhöhtem Verschleiß und erhöhter Abnutzung führt. Weiterhin ist, da Kabel sich umeinander verdrehen können, ein zusätzlicher Sicherheitsspielraum für die Längen der Kabel erforderlich, um eine Verkürzung aufgrund von Verdrehen ausgleichen zu können.

Es ist Aufgabe der vorliegenden Erfindung, Mittel für eine verbesserte Kabelschlaufe einer Windkraftanlage bereitzustellen, die nicht die aus dem Stand der Technik bekannten Nachteile aufweist.

Die Lösung nach der Erfindung liegt im Kabelsattel nach dem Hauptanspruch und der Windkraftanlage nach dem nebengeordneten Anspruch 11. Vorteilhafte Erweiterungen bilden den Gegenstand der Unteransprüche.

Somit betrifft die Erfindung einen Kabelsattel zum Stützen von Kabeln in einer Kabelschlaufe einer Windkraftanlage neben einem freihängenden Schlingenteil der Kabelschlaufe, wobei der Kabelsattel $n \in \mathbb{N}_{>1}$ vertikal übereinander angeordnete Sattelflächen umfasst, wobei wenigstens eine Sattelfläche eine Breite aufweist, die ausreichend ist, um wenigstens $1/n$ der Kabel zu stützen, und alle Sattelflächen gemeinschaftlich dimensioniert sind, um die Kabel darauf ohne Überlappung oder Kontakt zweier beliebiger nebeneinander liegender Kabeln zu stützen.

Weiterhin betrifft die Erfindung eine Windkraftanlage, die einen Turm, eine auf der Spitze des Turms derart angeordnete Gondel, dass die Gondel in der Azimutrichtung schwenken kann, und eine Mehrzahl an Kabeln, die mittels einer Kabelschlaufe vom Turm in die Gondel geführt werden, umfasst, wo die Kabel von einem Kabelsattel, der im Turm neben dem freihängenden Schlingenteil der Kabelschlaufe montiert ist, gestützt werden, wobei der Kabelsattel nach der Erfindung ausgelegt ist.

Die Erfindung basiert auf der Erkenntnis, dass eine Stützoberfläche für den freihängenden Schlingenteil der Kabelschlaufe, die in vertikal übereinander angeordnete Teile getrennt ist, gegenüber einer einstückigen, durchgängigen Stützfläche nach dem Stand der Technik mehrere Vorteile aufweist. Im Vergleich des Kabelsattels nach der Erfindung mit einem herkömmlichen Kabelsattel mit einer einstückigen Stützoberfläche von ausreichender Breite zum Stützen aller Kabel, ohne dass diese in Kontakt zueinander stehen, kann eine leichtere Struktur erreicht werden. Weiterhin kann die maximale Querverlagerung der äußersten Kabel in der freihängenden Schlinge erheblich reduziert werden, was die Torsionsbeanspruchung selbiger Kabel reduziert. Dennoch erreicht der Kabelsattel nach der Erfindung nach wie vor eine Stützung aller Kabel, ohne das diese direkt miteinander interagieren, und vermeidet somit unnötige Abnutzung und Verschleiß aufgrund von Scheuern und Verdrehen.

Generell ist die Anzahl an vertikal aufeinander angeordneten Sattelflächen unbegrenzt. In den meisten Fällen mit einer überschaubaren Anzahl an zu stützenden Kabeln (z. B. 20 bis 30 Kabel) bieten jedoch bereits zwei Kabelsattel alle Vorteile der Erfindung und halten gleichzeitig die Kabelsattelstruktur einfach und kosteneffizient. Somit ist bevorzugt, dass die Anzahl an Kabelsatteln n 2 ist (d. h. n 2).

Es ist bevorzugt, dass der Querschnitt von wenigstens einer Sattelfläche einen Kreisabschnitt umfasst, wobei die konvexe Seite wenigstens einen Teil der Kabelstützfläche bildet. Durch Zurückgreifen auf Kreisabschnitte für die Kabelstützfläche kann das Risiko, dass die Kabel über ihre maximale Krümmung hinaus gebogen werden, im Wesentlichen wenigstens in der Nähe des Kabelsattels eliminiert werden. Selbstverständlich muss der Radius der Kreisabschnitte für die Kabelstützflächen an die entsprechenden Kabeleigenschaften angepasst werden. Vorzugsweise weisen die Sattelflächen dieselbe Breite und/oder denselben Querschnitt auf. Dies ermöglicht, dass die die Sattelflächen bildenden Elemente zueinander identisch sind, was deren Herstellung vereinfacht. Wenn die Sattelflächen dieselbe Breite aufweisen, können die Kabel über alle Sattelflächen gleichmäßig verteilt sein.

Erfindungsgemäß sind die Sattelflächen an einem gemeinsamen Rahmen montiert, der die Sattelflächen in ihrer Relativposition fixiert und eine gemeinschaftliche Montage der Sattelflächen ermöglicht. Dies ermöglicht eine einfache Installation des Kabelsattels vor Ort innerhalb des Turms. Der gemeinsame Rahmen kann zudem Abschlusselemente oder -abschnitte umfassen, die an die Sattelflächen angrenzen und über diese hinausragen, um zu verhindern, dass Kabel von einer der beiden Sattelflächen abrutschen.

Es ist bevorzugt, dass die Sattelflächen mit einer Mehrzahl an Montageschlitzen versehen sind, um Fixierungsmittel, vorzugsweise Kabelbinder, aufzunehmen, um Kabel einzeln an den Kabelflächen zu fixieren. Auf diese Weise kann das Risiko, dass Kabel in der freihängenden Schlinge der Kabelschlaufe miteinander interagieren, dauerhaft dadurch eliminiert werden, dass sie ausreichend beabstandet befestigt werden.

Es ist bevorzugt, dass der Kabelsattel eine drehfeste, aber vertikal bewegbare Haltevorrichtung umfasst, an der die Kabel am anderen Ende des freihängenden Schlingenteils starr angebracht werden können. Auf diese Weise kann das Verdrehen von Kabeln aufgrund des Schwenkens der Gondel von dem freihängenden Schlingenteil der Kabelschlaufe ferngehalten werden. Die Haltevorrichtung kann mit dem Kabelsattel direkt verbunden, z. B. angelenkt, sein und somit einen integralen Bestandteil von letzterem bilden. Außerdem ist es möglich, dass die Haltevorrichtung als separates Element, das im Turm einer Windkraftanlage individuell zu montieren ist und dennoch einen funktionalen Bestandteil des Kabelsattels bildet, ausgelegt ist.

Vorzugsweise umfasst die Haltevorrichtung an der dem freihängenden Schlingenteil der Kabelschlaufe zugewandten Seite wenigstens eine lineare Reihe von Kabelhaltern, wobei vorzugsweise die Achse der wenigstens einen linearen Reihe zu der Breite der Sattelflächen des Kabelsattels parallel ist. Weiterhin ist bevorzugt, dass die Anzahl an linearen Reihen von Kabelhaltern der Anzahl an vertikal aufeinander angeordneten Sattelflächen des Kabelsattels gleich ist. Durch Bereitstellen von einer oder mehreren Reihen von Kabelhaltern kann der Verlauf der einzelnen Kabel in dem freihängenden Schlingenteil der Kabelschlaufe für alle vertikalen Positionen der Haltevorrichtung ziemlich genau definiert werden.

Die Sattelfläche, der gemeinsame Rahmen, die Abschlusselemente oder -abschnitte und/oder die Haltevorrichtung sind vorzugsweise wenigstens teilweise aus Stahl, vorzugsweise aus S 235 JR, hergestellt.

Die erfindungsgemäße Windkraftanlage ist hauptsächlich durch die Verwendung des erfindungsgemäßen Kabelsattels gekennzeichnet. Für Details wird somit auf oben verwiesen.

Die Erfindung wird nachstehend im Hinblick auf die beigefügten Figuren genauer beschrieben:

Figur 1a, b: schematische Darstellung einer ersten Ausführungsform eines Kabelsattels nach der Erfindung;

Figur 2a, b: schematische Darstellung des Kabelsattels nach Figur 1 in Verwendung; und

Figur 3: schematische Darstellung einer zweiten Ausführungsform eines Kabelsattels nach der Erfindung.

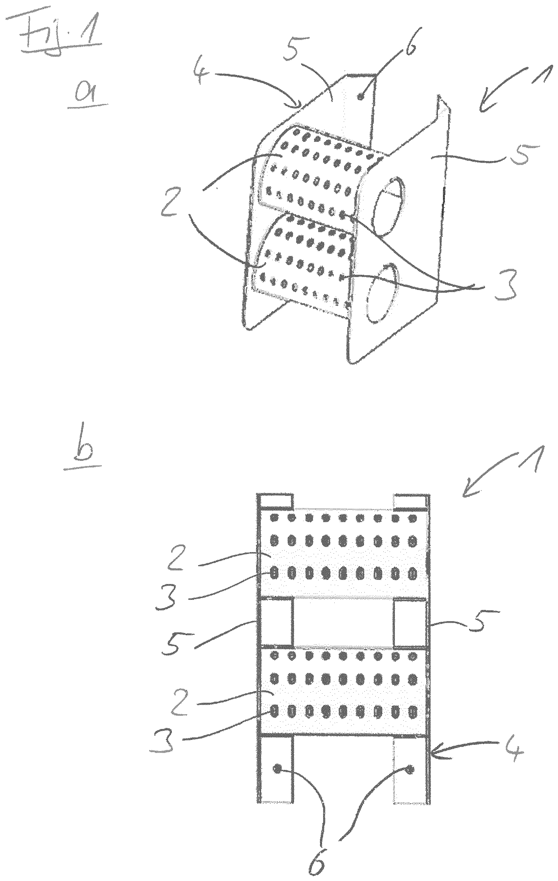

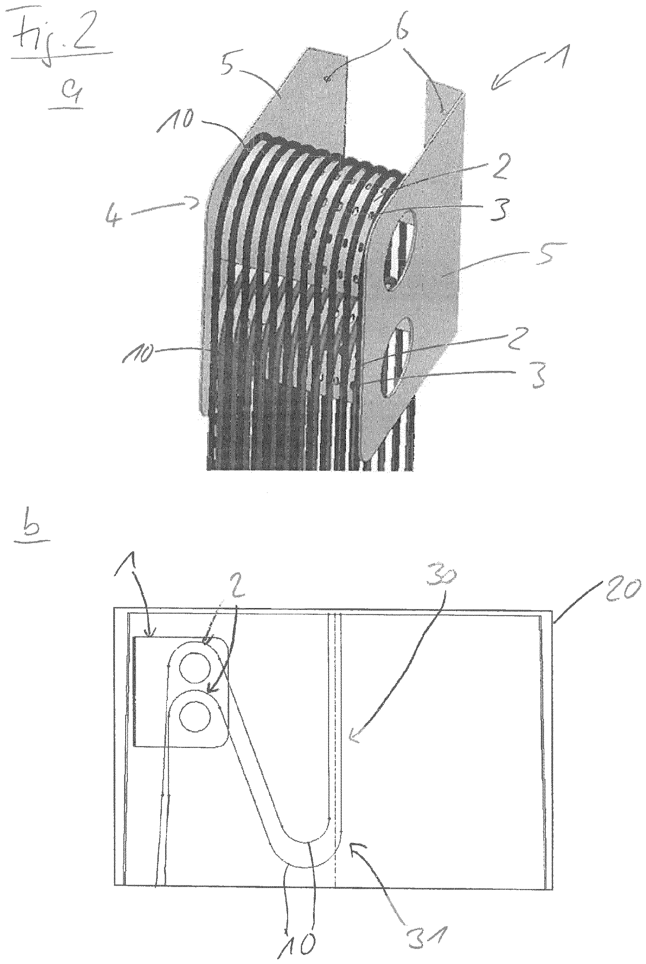

In Figur 1 ist eine erste Ausführungsform eines Kabelsattels 1 nach der Erfindung in zwei Ansichten dargestellt. Die tatsächliche Verwendung des Kabelsattels 1 ist in Figur 2 abgebildet.

Der Kabelsattel 1 soll die Kabel in einer Kabelschlaufe einer Windkraftanlage neben dem freihängenden Schlingenteil 31 der Kabelschlaufe 30 stützen. Dafür umfasst der Kabelsattel 1 zwei vertikal aufeinander angeordnete Sattelflächen 2. Die Sattelflächen 2 weisen beide eine identische Breite und einen identischen Querschnitt auf, um eine kosteneffiziente Herstellung zu vereinfachen.

Der Querschnitt beider Sattelflächen 2 besteht aus einem Kreisabschnitt, dessen konvexe Seite die tatsächliche Oberfläche, von der die Kabel 10 gestützt werden, bildet. Der Radius des Kreisabschnitts ist derart gewählt, dass die darauf gestützten Kabel 10 sich nicht über ihre jeweilige maximale Krümmung biegen. Die Breite der beiden Sattelflächen 2 ist derart gewählt, dass sie die Hälfte der Gesamtanzahl an Kabeln 10 der Kabelschlaufe (in diesem Beispiel: insgesamt 22 Kabel, d. h. jeweils 11 Kabel) darauf ausreichend beabstandet stützen kann, so dass keine Überlappung und kein Kontakt zwischen zwei beliebigen nebeneinander liegenden Kabeln 10 besteht.

Die Sattelflächen 2 werden mit einer Mehrzahl an Montageschlitzen 3 bereitgestellt. Mit diesen Montageschlitzen 3 können Kabelbinder (nicht dargestellt) ineinandergreifen, um die Kabel 10 in den gewünschten beabstandeten Positionen an den Sattelflächen 2 individuell zu befestigen.

Wie aus den Figuren leicht erkennbar ist, sind die beiden Sattelflächen 2 an einem gemeinsamen Rahmen 4, der zwei Abschlusselemente 5 umfasst, montiert. Die beiden Abschlusselemente 5 halten die Sattelfläche 2 in ihrer jeweiligen Relativposition und ermöglichen das Montieren des Kabelsattels 2 an der Innenwand eines Turms 20 einer Windkraftanlage (von welcher nur ein Teil in Figur 2b angedeutet ist) mittels Befestigungslöchern 6. Weiterhin sind die Abschlusselemente 5 dazu ausgelegt, an die Sattelflächen 2 anzugrenzen und über diese hinauszuragen. Auf diese Weise können selbst ohne Verwendung von Kabelbindern die Kabel 10 nicht von einer der beiden Sattelflächen 2 rutschen.

Wie in Figur 2b zu sehen ist, kann die freihängende Schlinge 31 der Kabelschlaufe 30 durch eine geeignete Wahl der Länge der Kabel 10 derart angeordnet werden, dass ein Zusammenstoßen zwischen Kabeln 10, die auf zwei unterschiedlichen Sattelflächen 2 des Kabelsattels 1 enden, vermieden wird.

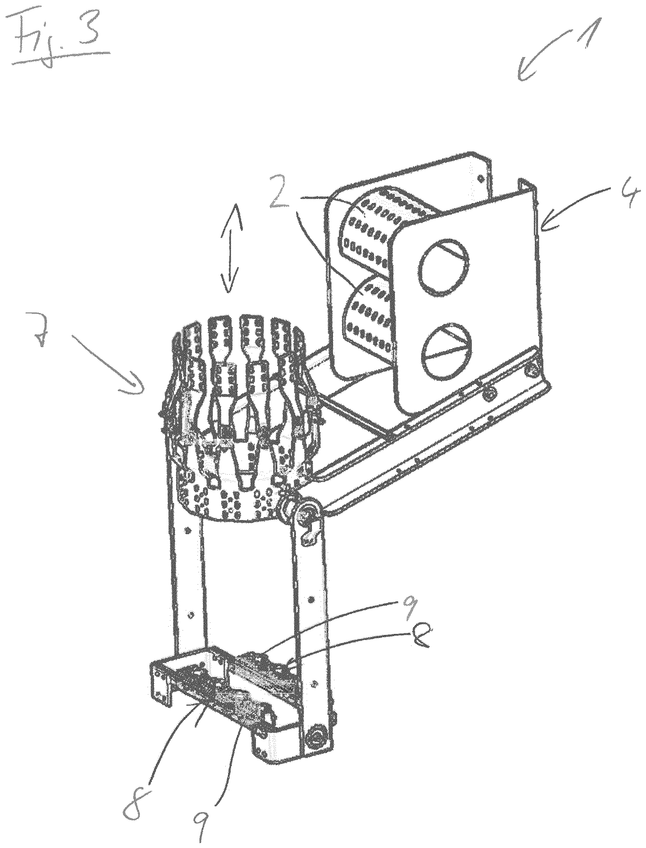

Figur 3 zeigt eine zweite Ausführungsform eines Kabelsattels 1 nach der vorliegenden Erfindung. Der Teil des Kabelsattels 1, der die tatsächlichen Kabelflächen 2, die am gemeinsamen Rahmen 4 montiert sind, umfasst, ist mit dem in den Figuren 1 und 2 gezeigten Kabelsattel 1 identisch. Somit wird für eine ausführliche Erklärung dieses Teils auf oben verwiesen.

Der in Figur 3 gezeigte Kabelsattel 1 umfasst weiterhin eine drehfeste, aber vertikal bewegbare Haltevorrichtung 7, an der die Kabel 10 am Ende des freihängenden Schlingenteils 31, der nicht von den Sattelflächen 2 gestützt wird, starr angebracht werden können. Mit dieser Haltevorrichtung 7 wird das Verdrehen der Kabel 10 aufgrund des Schwenkens der Gondel (nicht dargestellt) vom freihängenden Schlingenteil 31 der Kabelschlaufe 30 in einer grundsätzlich bekannten Weise ferngehalten. Die vertikale Bewegung der Haltevorrichtung 7 wird durch eine angelenkte Montage der Vorrichtung 7 am gemeinsamen Rahmen 4 erreicht.

Die Haltevorrichtung 7 an der dem freihängenden Schlingenteil 31 der Kabelschlaufe 30 zugewandten Seite umfasst zwei lineare Reihen 8 von Kabelhaltern 9, wobei die individuelle Achse beider linearer Reihen zu der Breite der Sattelflächen 2 des Kabelsattels 1 parallel ist. Mit diesen Kabelhaltern 9 kann ein Verlauf der Kabel 10 wie in Figur 2b dargestellt dauerhaft erreicht werden.

Die in den Figuren dargestellten Ausführungsformen sind aus Stahl der Klasse S 235 JR hergestellt.

**Patentansprüche**

1. Kabelsattel (1) zum Stützen von Kabeln (10) in einer Kabelschlaufe (30) einer Windkraftanlage neben dem freihängenden Schlingenteil (31) der Kabelschlaufe (30), wobei der Kabelsattel (1) $n \in \mathbb{N}_{>1}$ vertikal aufeinander angeordnete Sattelflächen (2) umfasst, wobei wenigstens eine Sattelfläche (2) eine Breite aufweist, die ausreichend ist, um wenigstens 1/n der Kabel (10) zu stützen, und alle Sattelflächen (2) gemeinschaftlich dimensioniert sind, um die Kabel (10) darauf ohne Überlappung oder Kontakt zwischen zwei beliebigen nebeneinander liegenden Kabeln (10) zu stützen, **dadurch gekennzeichnet, dass** die Sattelflächen (2) an einem gemeinsamen Rahmen (4) montiert sind, der die Sattelflächen (2) in ihrer relativen Position fixiert und eine gemeinschaftliche Montage der Sattelflächen (2) ermöglicht.

2. Kabelsattel nach Anspruch 1, wobei *n* = 2.

3. Kabelsattel nach einem beliebigen der vorstehenden Ansprüche, wobei der Querschnitt von wenigstens einer Sattelfläche (2) einen Kreisabschnitt umfasst, wobei die konvexe Seite wenigstens einen Teil der Kabelstützfläche bildet.

4. Kabelsattel nach einem beliebigen der vorstehenden Ansprüche, wobei die Sattelflächen (2) dieselbe Breite und/oder denselben Querschnitt aufweisen.

5. Kabelsattel nach den vorstehenden Ansprüchen, wobei der gemeinsame Rahmen (4) Abschlusselemente (5) oder -abschnitte umfasst, die an die Sattelflächen (2) angrenzen und über diese herausragen, um zu verhindern, dass Kabel (10) von einer der beiden Sattelflächen (2) rutschen.

6. Kabelsattel nach einem beliebigen der vorstehenden Ansprüche, wobei die Sattelflächen (2) mit einer Mehrzahl an Montageschlitzen (3) versehen sind, um Fixierungsmittel, vorzugsweise Kabelbinder, aufzunehmen, um Kabel (10) individuell an den Sattelflächen (2) zu fixieren.

7. Kabelsattel nach einem beliebigen der vorstehenden Ansprüche, wobei der Kabelsattel (1) eine drehfeste, aber vertikal bewegbare Haltevorrichtung (7) umfasst, an welcher die Kabel (10) am anderen Ende des freihängenden Schlingenteils (31) der Kabelschlaufe (30) starr anbringbar sind.

8. Kabelsattel nach Anspruch 7, wobei die Haltevorrichtung (7) an der dem freihängenden Schlingenteil (31) der Kabelschlaufe (30) zugewandten Seite wenigstens eine lineare Reihe (8) von Kabelhaltern (9) umfasst, wobei vorzugsweise die Achse der wenigstens einen linearen Reihe (8) zu der Breite der Sattelflächen (2) des Kabelsattels (1) parallel ist.

9. Kabelsattel nach Anspruch 8, wobei die Anzahl an linearen Reihen (8) von Kabelhaltern (9) der Anzahl an vertikal übereinander angeordneten Sattelflächen (2) des Kabelsattels (1) gleich ist.

**10.** Kabelsattel nach einem beliebigen der vorstehenden Ansprüche, wobei die Sattelfläche (3), der gemeinsame Rahmen (4), die Abschlusselemente (5) oder -abschnitte und/oder die Haltevorrichtung (7) wenigstens teilweise aus Stahl, vorzugsweise aus S 235 JR, hergestellt sind.

**11.** Windkraftanlage, die einen Turm (20), eine auf der Spitze des Turms (20) derart angeordnete Gondel, dass die Gondel in der Azimutrichtung schwenken kann, und eine Mehrzahl an Kabeln (10), die mittels einer Kabelschlaufe (30) vom Turm in die Gondel geführt werden, umfasst, wo die Kabel (10) von einem Kabelsattel (1), der im Turm (20) neben dem freihängenden Schlingenteil (31) der Kabelschlaufe (30) montiert ist, gestützt werden, **dadurch gekennzeichnet, dass** der Kabelsattel (1) nach einem beliebigen der vorstehenden Ansprüche ausgelegt ist.

**Claims**

**1.** Cable saddle (1) for supporting cables (10) in a cable loop (30) of a wind turbine next to the free-hanging sling part (31) of the cable loop (30), wherein the cable saddle (1) comprises $\eta \in N_{>1}$ vertically stacked saddle surfaces (2), wherein at least one saddle surface (2) has a width sufficient to support at least 1/n of the cables (10) and all saddle surfaces (2) are jointly dimensioned to support the cables (10) thereon without any overlap or contact between any two adjacent cables (10), **characterized in that** the saddle surfaces (2) are mounted to a common frame (4) that fixates the saddle surfaces (2) in their relative position and allows joint mounting of the saddle surfaces (2).

**2.** Cable saddle according to Claim 1, wherein $\eta$ = 2.

**3.** Cable saddle according to any one of the preceding claims, wherein the cross section of at least one saddle surface (2) comprises a circle segment, the convex side forming at least part of the cable supporting surface.

**4.** Cable saddle according to any one of the preceding claims, wherein the saddle surfaces (2) have the same width and/or the same cross section.

**5.** Cable saddle according to the preceding claims, wherein the common frame (4) comprises end elements (5) or sections adjacent to and protruding over the saddle surfaces (2) to prevent cables (10) slipping from either one of the saddle surfaces (2).

**6.** Cable saddle according to any one of the preceding claims, wherein the saddle surfaces (2) are provided with a plurality of mounting slots (3) to receive fixation means, preferably cable ties, to individually fix cables (10) to the saddle surfaces (2).

**7.** Cable saddle according to any one of the preceding claims, wherein the cable saddle (1) comprises a rotationally fixed but vertically movable holder element (7) to which the cables (10) may be fixedly attached at the outer end of the free-hanging sling part (31) of the cable loop (30).

**8.** Cable saddle according to Claim 7, wherein the holder element (7) at the side facing the free-hanging sling part (31) of the cable loop (30) comprises at least one linear row (8) of cable holders (9), wherein preferably the axis of the at least one linear row (8) is parallel to the width of the saddle surfaces (2) of the cable saddle (1).

**9.** Cable saddle according to Claim 8, wherein the number of linear rows (8) of cable holders (9) equals the number of vertically stacked saddle surfaces (2) of the cable saddle (1).

**10.** Cable saddle according to any one of the preceding claims, wherein the saddle surface (3), the common frame (4), the end elements (5) or sections and/or the holder element (7) are at least partially made from steel, preferably from S 235 JR.

**11.** Wind turbine comprising a tower (20), a nacelle arranged at the top of the tower (20) such that the nacelle can swivel in the azimuth direction and a plurality of cables (10) that are guided via a cable loop (30) from the tower into the nacelle, where the cables (10) are supported by a cable saddle (1) mounted in the tower (20) next to the free-hanging sling part (31) of the cable loop (30), **characterized in that** the cable saddle (1) is configured according to any one of the preceding claims.

**Revendications**

**1.** Selle de câble (1) destinée à supporter des câbles (10) dans une boucle de câble (30) d'une installation éolienne à côté de la partie d'élingue librement suspendue (31) de la boucle de câble (30), la selle de câble (1) comprenant $n \in \mathbb{N}_{>1}$ surfaces de selle (2) agencées verticalement les unes sur les autres, au moins une surface de selle (2) présentant une largeur qui est suffisante pour supporter au moins 1/n des câbles (10), et toutes les surfaces de selle (2) étant dimensionnées conjointement afin de supporter les câbles (10) sur celles-ci sans chevauchement ou contact entre deux câbles (10) quelconques situés l'un à côté de l'autre, **caractérisée en ce que** les surfaces de selle (2) sont montées sur un cadre commun (4), qui fixe les surfaces de selle (2) dans leur position relative et permet un montage conjoint des surfaces de selle (2).

2. Selle de câble selon la revendication 1, dans laquelle n = 2.

3. Selle de câble selon l'une quelconque des revendications précédentes, dans laquelle la coupe transversale d'au moins une surface de selle (2) comprend une section circulaire, le côté convexe formant au moins une partie de la surface de support de câble.

4. Selle de câble selon l'une quelconque des revendications précédentes, dans laquelle les surfaces de selle (2) présentent la même largeur et/ou la même coupe transversale.

5. Selle de câble selon les revendications précédentes, dans laquelle le cadre commun (4) comprend des éléments (5) ou sections de terminaison, qui sont adjacents aux surfaces de selle (2) et dépassent au-dessus de celles-ci, afin d'empêcher que des câbles (10) ne glissent d'une des deux surfaces de selle (2).

6. Selle de câble selon l'une quelconque des revendications précédentes, dans laquelle les surfaces de selle (2) sont munies d'une pluralité de fentes de montage (3), afin de recevoir des moyens de fixation, de préférence des attaches de câble, afin de fixer individuellement des câbles (10) sur les surfaces de selle (2).

7. Selle de câble selon l'une quelconque des revendications précédentes, dans laquelle la selle de câble (1) comprend un dispositif de maintien (7) immobile en rotation, mais déplaçable verticalement, sur lequel les câbles (10) peuvent être disposés de manière rigide à l'autre extrémité de la partie d'élingue librement suspendue (31) de la boucle de câble (30).

8. Selle de câble selon la revendication 7, dans laquelle le dispositif de maintien (7) comprend au moins une série linéaire (8) de maintiens de câble (9) sur le côté tourné vers la partie d'élingue librement suspendue (31) de la boucle de câble (30), l'axe de l'au moins une série linéaire (8) étant de préférence parallèle à la largeur des surfaces de selle (2) de la selle de câble (1).

9. Selle de câble selon la revendication 8, dans laquelle le nombre de séries linéaires (8) de maintiens de câble (9) est identique au nombre de surfaces de selle (2), agencées verticalement les unes au-dessus des autres, de la selle de câble (1).

10. Selle de câble selon l'une quelconque des revendications précédentes, dans laquelle la surface de selle (3), le cadre commun (4), les éléments ou parties de terminaison (5) et/ou le dispositif de maintien (7) sont au moins partiellement fabriqués en acier, de préférence en S 235 JR.

11. Installation éolienne, qui comprend une tour (20), une nacelle agencée sur la pointe de la tour (20) de telle sorte que la nacelle puisse osciller dans la direction azimutale, et une pluralité de câbles (10), qui sont acheminés au moyen d'une boucle de câble (30) de la tour dans la nacelle, où les câbles (10) sont supportés par une selle de câble (1), qui est montée dans la tour (20) à côté de la partie d'élingue librement suspendue (31) de la boucle de câble (30), **caractérisée en ce que** la selle de câble (1) est configurée selon l'une quelconque des revendications précédentes.

Fig. 1

a

b

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2010105852 A2
- EP 2495439 A1
- US 2012133144 A1